# EUROPÄISCHE PATENTSCHRIFT

(11) **EP 1 872 024 B1**
(45) Veröffentlichungstag und Bekanntmachung des Hinweises auf die Patenterteilung: **11.06.2014**
(21) Anmeldenummer: 06742253.5
(22) Anmeldetag: 19.04.2006
(51) Int. Cl.: F16D 1/076, F16D 1/072

(54) **STIRNVERZAHNUNG AN EINEM KUPPLUNGSELEMENT ZUM ÜBERTRAGEN VON DREHMOMENTEN**
FACE CUTTING ON A COUPLING ELEMENT FOR TRANSMITTING TORQUES
DENTURE FRONTALE D'UN ELEMENT DE COUPLAGE DESTINEE A LA TRANSMISSION DE COUPLES

(30) Priorität: 20.04.2005 DE 102005018127
(43) Veröffentlichungstag der Anmeldung: 02.01.2008
(73) Patentinhaber: Schaeffler Technologies GmbH & Co. KG, 91074 Herzogenaurach (DE)
(72) Erfinder: LANGER, Roland, 97523 Schwanfeld (DE); MASUR, Ernst, 97508 Untereuerheim (DE); HEISS, Ralf, 97421 Schweinfurt (DE); FÜLLER, Benno, 97753 Karlstadt (DE); NIEBLING, Peter, 97688 Bad Kissingen (DE)
(86) Internationale Anmeldenummer: PCT/DE2006/000677
(87) Internationale Veröffentlichungsnummer: WO 2006/111140

(56) Entgegenhaltungen:
- DE-A1- 3 636 243
- US-A- 4 460 058
- US-A- 5 799 766
- US-A1- 2002 187 843

## Beschreibung

### Gebiet der Erfindung

Die Erfindung betrifft eine Stirnverzahnung an wenigstens einem Kupplungselement zum Übertragen von Drehmomenten um eine Drehachse, wobei die Stirnverzahnung axial in eine entsprechende Gegenverzahnung greift. Die Stirnverzahnung weist Zähne aus zumindest teilweise spanlos plastisch geformten Material des Kupplungselementes auf.

### Hintergrund der Erfindung

Eine derartige Stirnverzahnung ist zum Beispiel nach DE 36 36 243 A1 in einer Radlagereinheit vorgesehen. In der Radlagereinheit ist eine Nabe mittels eines Radlagers drehbar gelagert. Die Nabe ist drehfest mit einem Fahrzeugrad verbunden und von einer Gelenkwellenanordnung antreibbar. In dem betrachteten Fall ist die Nabe mit der Gelenkwellenanordnung gekuppelt. Als Kupplungselement ist die Glocke eines Gelenkes vorgesehen, an der die Stirnverzahnung ausgebildet ist. Die Stirnverzahnung ist einer entsprechenden Gegenverzahnung axial zugewandt. Die Gegenverzahnung ist ebenfalls eine Stirnverzahnung und direkt an der Nabe oder an einem auf der Nabe sitzenden Innenring des Radiagers ausgebildet. Die Stirnverzahnungen greifen axial ineinander und sind axial miteinander verspannt. Über diese Verbindung sind Drehmomente um die Drehachse von der Gelenkwellenanordnung zur Nabe und damit zum Fahrzeugrad oder in umgekehrte Richtung übertragbar. Die Verzahnungen sind in der Regel axial so miteinander verspannt, dass die Zahnflanken gleichmäßig belastet sind. Das setzt jedoch voraus, dass die Geometrie der Verzahnung sehr genau ausgeführt ist, so dass der axial und umfangsseitig wirkende tragende Anteil sehr hoch ist.

Nach DE 36 36 243 A1 ist vorgesehen, dass die Stirnverzahnungen durch Kaltumformen bestimmter Bereiche des Materials der Kupplungselemente eingeformt wird. Dazu wird das Material durch Zuführen von Formwerkzeugen aus axialer Richtung und teilweise auch durch Schwenken der Werkzeuge zur Drehachse in radiale Richtung plastisch verdrängt. Der Widerstand des Materials gegen das Verdrängen ist insbesondere an dem Kupplungselement der Gelenkwelleanordnung besonders hoch, da das Material direkt aus der Oberfläche des Kupplungselementes und somit aus einer relativ großen und massiven Materialanhäufung geformt werden muss. Die für den Umformgang erforderlichen Kräfte sind sehr hoch. Maschinen mit der dementsprechend hohen erforderlichen Leistung sind teuer. Es ist schwer einzelne Zähne der Verzahnung mit der erforderlichen Genauigkeit und mit einem hohen Traganteil der Zähne auszubilden, da ein Großteil des Materials aufgrund der hohen Umformkräfte radial nach außen ausweicht und nicht ins Formwerkzeug fließt.

Aus US 4 460 0 58 ist eine Radlagereinheit bekannt, die eine Drehmomentübertragung von einer Gelenkglocke auf eine Radnabe über eine Stirnverzahnung realisiert. Die Gelenkglocke und die Radnabe sind durch eine Dehnschraube vorgespannt, weshalb die Stirnverzahnung spleifrel Kräfte Übertragen kann.

### Zusammenfassung der Erfindung

Die Aufgabe der Erfindung ist es daher ein Kupplungselement mit einer Stirnverzahnung mit hohem Traganteil zu schaffen, das sich kostengünstig herstellen lässt.

Diese Aufgabe ist mit den Merkmalen des Anspruches 1 dadurch gelöst, dass die Stirnverzahnung an wenigstens einem Abschnitt ausgebildet ist, der axial aus dem Kupplungselement hervorgeht. Der Abschnitt beliebiger Form weist an einer axialen Stirnseite zumindest anteilig die Zähne der Stirnverzahnung auf. Die Stirnverzahnung kann auch die Gegenverzahnung des weiteren Kupplungselementes in der Drehmomentkupplung sein.

Der Abschnitt verläuft ringförmig rotationssymmetrisch um die Drehachse verläuft. Eine axial geöffnete Ringnut ist radial zwischen dem axial aus dem Kupplungselement hervorstehenden Abschnitt und einem Teil des Kupplungselementes ausgebildet, d.h. wenn der ringförmige Abschnitt zumindest einen Teil des Kupplungselementes konzentrisch umgibt.

Der vorzugsweise einteilig mit dem Kupplungselement ausgebildete Abschnitt wird so ausgelegt, dass nur das Material beim Umformen verdrängt werden muss, das für die Ausbildung der Verzahnung notwendig ist. Weiteres Material des Kupplungselementes hindert den Umformgang nicht mehr, da zunächst die Anhäufung des Materials auf das Notwendigste beschränkt ist. Die für den Umformgang notwendigen Kräfte sind reduziert. Es können kostengünstig Maschinen mit geringeren Leistungskenndaten verwendet werden. Die Zähne sind besser ausgebildet und weisen einen höheren Traganteil auf.

Die Erfindung betrifft alle Kupplungen zum Übertragen von Drehbewegungen und Drehmomenten, in denen wenigstens zwei Kupplungselemente mittels axialer Stirnverzahnungen axial ineinander greifen - vorzugsweise Drehmomentkupplungen in Radlagereinheiten, die eine mittels Gelenkwellenanordnung angetriebene Nabe aufweisen.

Weitere Ausgestaltungen der Erfindung betreffen die geometrische Gestalt des Abschnittes vor dem Formen. So ist vorgesehen, dass der Abschnitt vor dem Formen der Zähne zumindest radial durch sich einander radial annähernde Konturen begrenzt ist und sich somit im Querschnitt in eine Richtung verjüngt. An den schmaleren Bereichen des Abschnittes muss beim Umformen weniger Material verdrängt werden. Das wenige Material fließt kontrolliert in die Werkzeugformen und weicht nicht unkontrolliert aus. Mit derartigen Gestaltungen lässt sich somit die Präzision und die Qualität des Umformganges gezielt beeinflussen.

In einer möglichen Ausgestaltung des Abschnittes verläuft die im Längsschnitt radial äußere der Konturlinie zunächst zur Drehachse abfallend in Richtung der Stirnseite und geht schließlich an der Stirnseite in eine radial innere Konturlinie über. Dies ist beispielsweise dann der Fall, wenn sich an einem ringförmigen Abschnitt der Außendurchmesser der radialen Außenkontur in Richtung der Stirnseite zunehmend stetig linear, oder degressiv oder mit sich willkürlich änderndem Verlauf verringert.

Es ist auch vorgesehen, dass eine im Längsschnitt radial innere Konturlinie zunächst über der Drehachse ansteigend in Richtung Stirnseite verläuft und dann an der Stirnseite in eine radial äußere Konturlinie übergeht. Dies ist dann der Fall, wenn sich der Innendurchmesser eines ringförmigen Abschnittes in Richtung der Stirnseite stetig linear, oder degressiv, progressiv oder mit sich willkürlich änderndem Verlauf vergrößert.

Es ist von Vorteil, wenn beide der zuvor genannten Verläufe zusammen an einem Abschnitt verwirklicht sind.

Das zu verdrängende Material wird mit abnehmender Entfernung von der Stirnseite zunehmend weniger. Beim Auftreffen des Formwerkzeugs auf die Stirnseite wird zunächst wenig Material verdrängt. Das Material bringt dem Umformgang somit anfangs wenig Widerstand entgegen und weicht ins Formwerkzeug und zur Seite aus. Dabei fließt das Material nicht ungewollt nach außen sondern in das Formwerkzeug und verteilt sich dann im Formwerkzeug zumindest teilweise in die radialen Richtungen. Das Formwerkzeug ist besser mit dem Material gefüllt. Je dichter das Formwerkzeug der Basis axial näher kommt umso größer wird der Widerstand gegen das Fließen. Die Basis ist der Übergang an dem der Abschnitt aus der Masse des Materials des Kupplungselementes hervorgeht oder in diesen übergeht. Das in der Form befindliche Material wird gleichmäßig in dem Formwerkzeug verteilt und füllt dieses nahezu vollständig. Die Form der Zähne an der fertigen Verzahnung ist demzufolge besser ausgebildet.

Die Form der Zähne ist optimal gestaltet, wenn der Umriss des Abschnittes vor dem Formen der Zähne durch die schon zuvor beschriebenen sich einander radial annähernde Konturen begrenzt ist. Dabei stehen die Abmessungen des Abschnittes vor dem Formen und die Abmessungen der Zähne nach dem Formen in einem vorbestimmten Verhältnis. So ist mit einer Ausgestaltung der Erfindung vorgesehen, dass der größte Abstand zwischen den Konturen vor dem Formen der Zähne da ist, wo der Abschnitt aus dem Kupplungselement hervorgeht. Die kleinste in axialer Projektion betrachtete Gesamtlänge der geformten Zähne ist höchstens um 1/5 des in axialer Projektion betrachteten größten Abstandes zwischen den Konturen größer als der größte Abstand in der axialen Projektion. Die in der Projektion betrachtete Gesamtlänge kann auch kleiner bzw. gleich dem axialen Abstand in der axialen Projektion sein. Die Gesamtlänge ist in der Zahnfußebene der Stirnverzahnung gemessen.

Alternativ oder gleichzeitig dazu ist der Abschnitt vor dem Formen der Zähne in radialer Projektion mindestens doppelt so lang wie die theoretische Zahnhöhe der geformten Zähne. In die radiale Projektion ist dabei der größte Abstand zwischen der Stirnseite und der Basis projiziert, an der der Abschnitt axial aus dem Kupplungselement hervorgeht. Die theoretische Zahnhöhe ist der größte gemessene axiale Abstand zwischen der Zahnfußebene und der Zahnkopfebene in einem Formwerkzeug zum Formen der Zähne.

Durch die Erfindung ist es möglich mittels der fertigen Sollabmessungen der einzelnen Zähne bzw. der Verzahnung den Rohling in Form des Abschnittes auf einfache Weise hinsichtlich der Umformkräfte und des Materialflusses zu gestalten.

Unter Stirnverzahnung und deren Zähne ist in diesem Fall jede Anordnung von zueinander benachbarten axial hervorstehenden Erhöhungen an der Stirnseite zu verstehen, die geordnet oder willkürlich in der Nachbarschaft mit axialen Vertiefungen (beispielsweise Zahnlücken) zwischen den Erhöhungen kooperieren und die mit einer entsprechenden Gegenverzahnung korrespondieren. Vorzugsweise ist die bekannte Form der Stirnverzahnung vorgesehen, in der Zähne und Zahnlücken der Zähne umfangsseitig zueinander benachbart und radial der Länge nach ausgerichtet sind. Die Verzahnung ist vorzugsweise durch Kaltumformen aus Stahl hergestellt, denkbar ist jedoch auch die Anwendung aller weiteren denkbaren Umformverfahren, der Einsatz von Leichtmetallen- oder Leichtmetallegierungen und Kunststoffen.

Es ist auch die spanabhebende Nachbearbeitung der Verzahnung nach dem Formen vorgesehen.

### Beschreibung der Zeichnungen

Die Erfindung wird nachfolgend anhand von Ausführungsbeispielen näher erläutert.

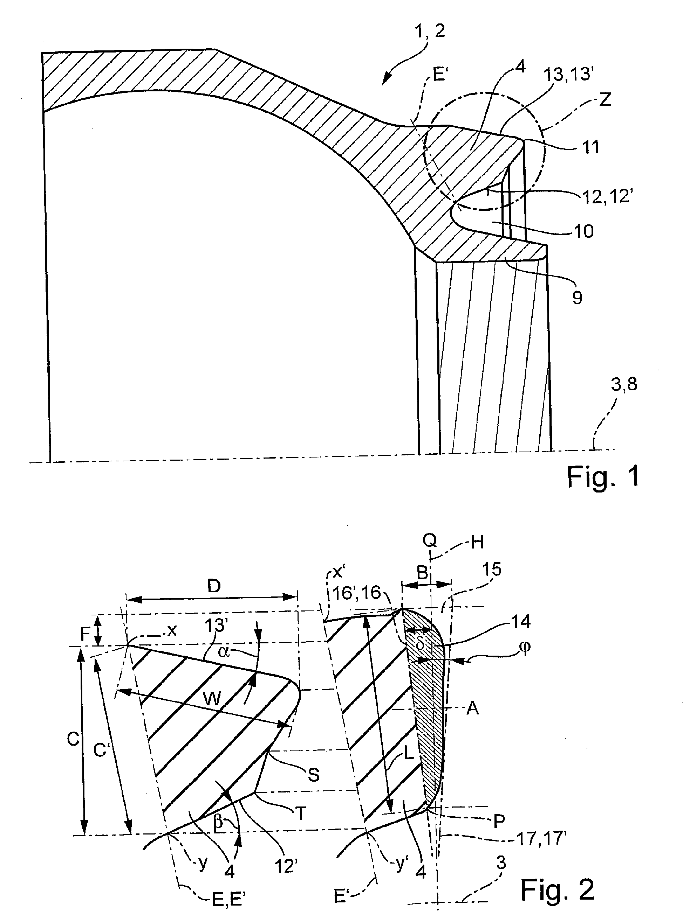

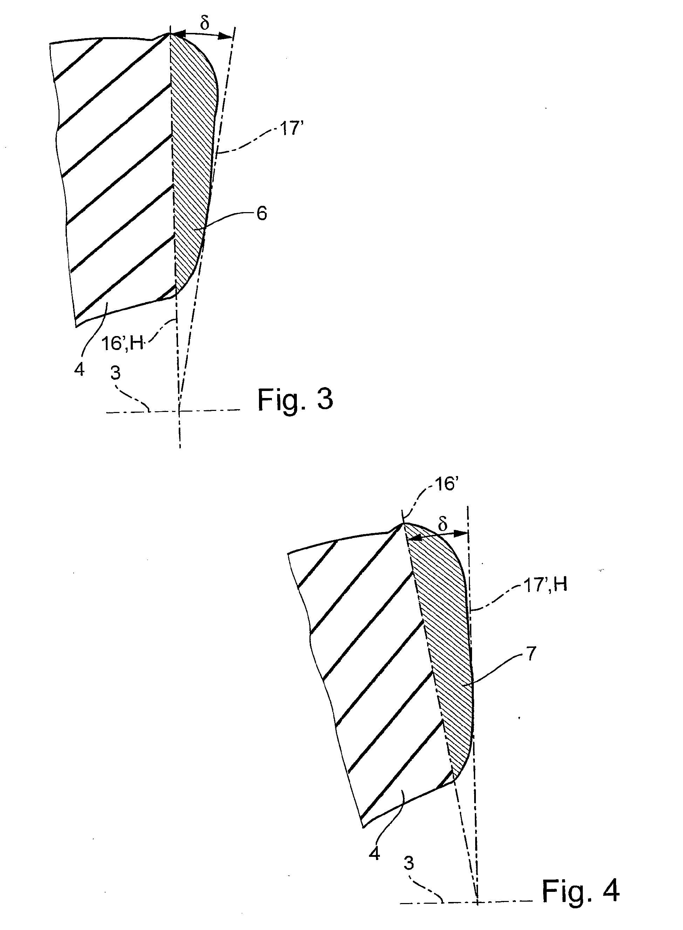

Figur 1 zeigt ein Ausführungsbeispiel eines Kupplungselementes 1 in Form einer Gelenkglocke 2 einer nicht weiter dargestellten Gelenkwellenanordnung. Die im wesentlichen um die Drehachse 3 rotationssymmetrisch ausgebildete Gelenkglocke 2 ist teilweise in einem Längsschnitt axial entlang der Drehachse 3 dargestellt. Das Kupplungselement 1 ist mit einem Abschnitt 4 versehen, der in Figur 1 in einem Ausgangszustand vor dem Formen und in den Figuren 3, 4 und 5 mit angeformter Verzahnung 5, 6 oder 7 dargestellt ist.

Der Abschnitt 4 ist ein axial an einer Basis E' einstückig aus dem Material der Gelenkglocke 2 hervorgehender ringförmiger Wulst, dessen Symmetrieachse 8 auf der Drehachse 3 liegt. Radial zwischen dem Abschnitt 4 und zwischen einem Teil 9 des Kupplungselementes 1 ist eine Ringnut 10 ausgebildet. Die Ringnut 10 ist in die axiale Richtung geöffnet, in die die Stirnseite 11 an dem Abschnitt 4 weist.

Der Abschnitt 4 ist radial durch die sich einander annähernden Konturen 12 und 13 begrenzt. Die Konturen 12 und 13 gehen von den Punkten X bzw. Y aus. Die durch die Punkte X und Y verlaufende Ebene E wird in diesem Fall als die Basis E' des Abschnittes 4 betrachtet, an der der Abschnitt 4 in das Kupplungselement 1 übergeht. Die Kontur 12 ist in den Längsschnitten entlang der Drehachse 3 nach Figur 1, 2, 3 und 4 durch die Konturlinien 12' und 13' beschrieben. Die radial außen verlaufende äußere Konturlinie 13' liegt der radial innen verlaufenden inneren Konturlinie 12' zumindest radial solange gegenüber, bis die Konturlinien 12' und 13' an der Stirnseite 11 radial ineinander übergehen.

Figur 2 zeigt das Detail Z des Abschnittes 4 aus Figur 1 vor dem Einformen der Verzahnung 5 sowie den durch Kaltumformen verformten Abschnitt 4 mit der Verzahnung 5 in der Gegenüberstellung, nicht maßstäblich und vergrößert dargestellt.

Die Konturlinie 13' verläuft von X aus zunächst als Gerade und ist um den Winkel α in Richtung der Drehachse geneigt. Der Winkel α ist vorzugsweise 5° < α < 20°. Im weiteren Verlauf krümmt sich die Konturlinie 13' in Richtung der Drehachse und geht in die Konturlinie 12' über. Die Konturlinie 12' steigt von Y aus als Gerade an und ist mit dem Winkel β zur Drehachse geneigt. Der Winkel β ist vorzugsweise 15° < β < 30°. Die Konturlinie 12' knickt im weiteren Verlauf ab Punkt T ab und verläuft mit einem steileren Anstieg sowie ab Punkt S mit geringerem Anstieg und krümmt sich schließlich in radiale Richtung, um in die Konturlinie 13' überzugehen. Alternativ ist es denkbar, dass die Konturlinien 12' und 13' anstatt durch Geraden durch gekrümmte Verläufe oder Kombinationen aus Geraden und gekrümmten Verläufen beschrieben sind.

Die gepunkteten Linien 16 und 17 in der Darstellung mit den geformten Zähnen 14 der Verzahnung 5 deuten grob schematisch die Konturen einer Negativform 15 des Werkzeuges für einen einzelnen Zahn 14 an. Dabei ist die Negativform 15 theoretisch vollständig von Material ausgefüllt, das aus dem Abschnitt 4 verdrängt wurde. Die Linie 16 begrenzt den Zahnfuß und steht somit in der Darstellung auch für eine durch die Punkte P und Q gelegte Zahnfußebene 16'. Die Zahnfußebene 16' ist der Übergang, an dem der Zahn 14 in den Abschnitt 4 übergeht und markiert gleichzeitig in der Ansicht den Scheitel im Grunde der Zahnlücken. Die Linie 17 markiert die theoretische Zahnkopflinie bzw. Zahnkopfebene 17'.

Der größte Abstand C' zwischen den Konturen 12 und 13 vor dem Formen der Zähne ist in der Basis E' zwischen den Punkten X und Y. In der axialen Projektion ergibt sich aus der Strecke C' der Abstand C. Die Gesamtlänge der Zähne L ist in der Zahnfußebene 16' die Strecke L zwischen den Punkten P und Q. Die axiale Projektion von L ist die Strecke A. Nach einer Ausgestaltung der Erfindung ist vorgesehen, dass die Strecke A höchstens ein siebtel größer ist als die Strecke C. Die Punkte X und Y wandern demnach beim Formen der Zähne kaum in radiale Richtung aus. Das beim Formen plastisch verdrängte Material fließt somit zur Bildung des Zahnes 14 fast ausschließlich in die Negativform 15.

Die in radialer Projektion D wiedergegebene größte Länge W des Abschnittes 4 vor dem Formen der Zähne 14 ist mindestens doppelt so lang wie die theoretischen Zahnhöhe B der geformten Zähne 14. In die radiale Projektion ist dabei der größte Abstand W zwischen der Stirnseite 11 und der Basis E' projiziert. Die theoretische Zahnhöhe B ist der größte gemessene axiale Abstand B zwischen der Zahnfußebene 16' und der Zahnkopfebene 17' in einem Formwerkzeug zum Formen der Zähne.

Die Zahnfußebene 16' der Verzahnung 5 ist in dem Längsschnitt nach Figur 2 entgegen dem Uhrzeigersinn mit einem spitzen Winkel δ von der Ebene H weg geneigt. Die Ebene H ist eine Ebene, die von der Drehachse 3 senkrecht durchstoßen ist. Die Zahnkopfebene 17' ist mit dem Uhrzeigersinn um den spitzen Winkel ϕ zu der Ebene H geneigt. In der Darstellung nach Figur 3, einer alternativen Gestaltung des Abschnittes 4 nach dem Formen einer Verzahnung 6, liegt die Zahnfußebene 16' in der Ebene H und ist somit senkrecht von der Drehachse 3 durchstoßen. Die Zahnkopfebene 17' ist in diesem Fall im Uhrzeigersinn um den spitzen Winkel ϕ von der Zahnfußebene 16' und damit von der Ebene weg geneigt.

In der Darstellung nach Figur 4 ist die Zahnkopfebene 17' einer Verzahnung 7 senkrecht von der Drehachse 3 durchstoßen und liegt somit in der Ebene H. Die Zahnfußebene 16' ist in diesem Fall entgegen dem Uhrzeigersinn im spitzen Winkel δ von der Zahnfußebene 17' weg geneigt.

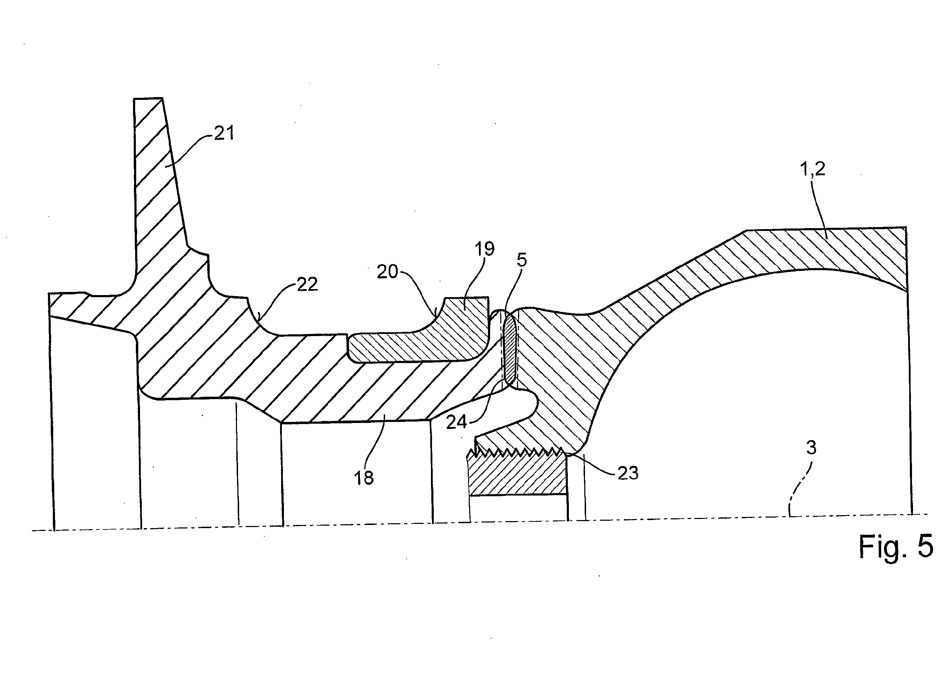

Figur 5 zeigt in einer Längsschnitt wie das Kupplungselement 1 in Form der Gelenkglocke 2 mit einer Nabe 18 drehfest gekoppelt ist. Die Nabe 18 ist Teil einer Radlagereinheit, von der lediglich ein Innenring 19 mit einer Laufbahn 20 für Wälzkörper und ein Flansch 21 an der Nabe 18 zur Befestigung eines nicht dargestellten Fahrzeugrades dargestellt ist. An dem Flansch 21 ist eine weitere Laufbahn 22 für eine weitere Reihe Wälzkörper ausgebildet. Die Nabe 18 ist mit der Gelenkglocke 2 gekuppelt. Dazu greifen die Verzahnung 5 und eine entsprechende Gegenverzahnung 24 axial ineinander und sind mittels Schraubelementen 23 axial miteinander verspannt. Zwischen der Gelenkglocke 2 und der Nabe 18 sind Drehmomente um die Drehachse 3 übertragbar.

**Bezugszeichen**

| | | | |
|---|---|---|---|
| 1 | Kupplungselement | 16 | Linie |
| 2 | Gelenkglocke | 16' | Zahnfußebene |
| 3 | Drehachse | 17 | Linie |
| 4 | Abschnitt | 17' | Zahnkopfebene |
| 5 | Stirnverzahnung | 18 | Nabe |
| 6 | Stirnverzahnung | 19 | Innenring |
| 7 | Stirnverzahnung | 20 | Laufbahn |
| 8 | Symmetrieachse | 21 | Flansch |
| 9 | Teil | 22 | Laufbahn |
| 10 | Ringnut | 23 | Schraubelement |
| 11 | Stirnseite | 24 | Gegenverzahnung |
| 12 | Kontur | | |
| 12' | Konturlinie | | |
| 13 | Kontur | | |
| 13' | Konturlinie | | |
| 14 | Zahn | | |
| 15 | Negativform | | |

## Patentansprüche

1. Kupplungselement (1) mit einer Stirnverzahnung (5, 6, 7) zum Übertragen von Drehmomenten um eine Drehachse (3), wobei die Stirnverzahnung (5, 6, 7) axial in eine entsprechende Gegenverzahnung (24) greift, die Stirnverzahnung (5, 6, 7) mit Zähnen (14) aus zumindest teilweise spanlos plastisch geformten Material des Kupplungselementes (1) ausgebildet ist, wobei die Stirnverzahnung (5, 6, 7) an wenigstens einem Abschnitt (4) (4) ausgebildet ist, der axial aus dem Kupplungselement (1) hervorgeht und der an einer axiale Stirnseite (11) zumindest anteilig die Zähne (14) aufweist, wobei der Abschnitt (4) ringförmig rotationssymmetrisch um die Drehachse (3) verläuft, **dadurch gekennzeichnet, dass** radial zwischen dem axial aus dem Kupplungselement (1) hervorstehenden Abschnitt (4) und einem Teil des Kupplungselementes (1) eine axial geöffnete Ringnut (10) ausgebildet ist.

2. Kupplungselement nach Anspruch 1, **dadurch gekennzeichnet, dass** das Kupplungselement (1) einer Gelenkwellenanordnung zum Antreiben wenigstens eines Fahrzeugrades zuordenbar ist.

3. Kupplungselement nach Anspruch 1, **dadurch gekennzeichnet, dass** der Abschnitt (4) einmaterialig mit dem Kupplungselement (1) ausgebildet ist.

4. Kupplungselement nach Anspruch 1, **dadurch gekennzeichnet, dass** sich die Konturen (12, 13) von da aus, wo der Abschnitt (4) axial aus dem Kupplungselement (1) hervorgeht, in Richtung der Stirnseite (11) radial einander zunehmend nähern und schließlich die Konturen (12, 13) an der Stirnseite (11) des Abschnitts (4) ineinander übergehen.

5. Kupplungselement nach Anspruch 4, **dadurch gekennzeichnet, dass** sich die Konturen (12, 13) in beliebigen axial entlang der Drehachse (3) ausgerichteten Längsschnitten zunächst durch einander radial gegenüberliegende Konturlinien (12', 13') umrissen sind, wobei eine im Längsschnitt radial äußerte der Konturlinien (13') zunächst zur Drehachse (3) abfallend in Richtung der Stirnseite (11) verläuft und schließlich an der Stirnseite (11) in eine radial innere Konturlinie (12') übergeht.

6. Kupplungselement nach Anspruch 4, **dadurch gekennzeichnet, dass** die Konturen (12, 13) in beliebigen axial entlang der Drehachse (3) ausgerichteten Längsschnitten zunächst durch einander radial gegenüberliegende Konturlinien (12', 13') umrissen sind, wobei eine im Längsschnitt radial innere Konturlinie (12') zunächst über der Drehachse (3) ansteigend in Richtung Stirnseite (11) verläuft und dann an der Stirnseite (11) in eine radial äußere Konturlinie (13') übergeht.

7. Kupplungselement nach Anspruch 1, **dadurch gekennzeichnet, dass** die Zähne (14) und Zahnlücken der Zähne (14) zwischen den umfangsseitig zueinander benachbarten Zähnen (14) der Länge nach radial ausgerichtet sind.

8. Kupplungselement nach Anspruch 7, **dadurch gekennzeichnet, dass** der Abschnitt (4) vor dem Formen der Zähne (14) zumindest radial durch sich einander radial annähernde Konturen (12, 13) begrenzt ist.

9. Kupplungselement nach Anspruch 8, **dadurch gekennzeichnet, dass** der größte Abstand (C') zwischen den Konturen (12, 13) an dem Abschnitt (4) vor dem Formen der Zähne (14) an einer Basis (E') ist, wobei der Abschnitt (4) an der Basis (E') aus dem Kupplungselement (1) hervorgeht, und dabei die kleinste Gesamtlänge (L) der geformten Zähne (14) in axialer Projektion (A) höchstens um ein Fünftel größer ist als die axiale Projektion (C) des Abstandes (C'), und wobei die Gesamtlänge (L) der Zähne (14) in der Zahnfußebene (16') der Stirnverzahnung (5, 6, 7) gemessen ist.

10. Kupplungselement nach Anspruch 8, **dadurch gekennzeichnet, dass** die in radialer Projektion (D) wiedergegebene größte Länge (W) des Abschnittes (4) vor dem Formen der Zähne (14) mindestens doppelt so lang ist, wie die theoretische Zahnhöhe (B) der geformten Zähne (14), wobei in die Projektion (D) die größte Länge (W) zwischen der Stirnseite (11) und einer Basis (E'), an der der Abschnitt (4) axial aus dem Kupplungselement (1) hervorgeht, projiziert ist, und wobei die theoretische Zahnhöhe /B) der größte in einem Formwerkzeug zum Formen der Zähne (14) gemessene axiale Abstand zwischen der Zahnfußebene (16') und der Zahnkopfebene (17) ist.

11. Kupplungselement nach einem der vorangehenden Ansprüche, **dadurch gekennzeichnet, dass** es eine Gelenkglocke (2) ist.

12. Radlagereinheit aufweisend ein Kupplungselement (1)nach einem der Ansprüche 1 bis 11 und eine Nabe (18), **dadurch gekennzeichnet, dass** das Kupplungselement (1) einer Gelenkwellenanordnung zum Antreiben wenigstens eines Fahrzeugrades zugeordnet ist und die Gegenverzahnung (24) der Nabe (18) zugeordnet ist, wobei die Nabe (18) zusammen mit dem Fahrzeugrad mittels einer Radlagerung drehbar gelagert ist.

## Claims

1. Coupling element (1) having a spur toothing (5, 6, 7) on at least one for transmitting torques about a rotational axis (3), with the spur toothing (5, 6, 7) engaging axially into a corresponding mating toothing (24), the spur toothing (5, 6, 7) being formed by teeth (14) composed of material, which is at least partially plastically formed in a non-cutting process, of the coupling element (1), with the spur toothing (5, 6, 7) being formed on at least one section (4) which projects axially out of the coupling element (1) and which has the teeth (14) at least proportionally on an axial end side (11), with the section (4) running annularly in a rotationally symmetrical fashion around the rotational axis (3), **characterized in that** an axially open annular groove (10) is formed between the section (4), which projects axially from the coupling element (1), and a part of the coupling element (1).

2. Coupling element according to Claim 1, **characterized in that** the coupling element (1) can be assigned to a cardan shaft arrangement for driving at least one vehicle wheel.

3. Coupling element according to Claim 1, **characterized in that** the section (4) is formed in a materially integral fashion with the coupling element (1).

4. Coupling element according to Claim 1, **characterized in that** the contours (12, 13), from the point where the section (4) projects axially from the coupling element (1), converge on one another radially to an increasing degree in the direction of the end side (11), and the contours (12, 13) ultimately merge into one another at the end side (11) of the section (4).

5. Coupling element according to Claim 4, **characterized in that** the contours (12, 13) are outlined, in arbitrary longitudinal sections which are aligned axially along the rotational axis (3), initially by contour lines (12', 13') which are situated opposite one another radially, with a radially outer contour line (13') in longitudinal section initially running so as to fall toward the rotational axis (3) in the direction of the end side (11), and ultimately merging at the end side (11) into a radially inner contour line (12').

6. Coupling element according to Claim 4, **characterized in that** the contours (12, 13) are outlined, in arbitrary longitudinal sections which are aligned axially along the rotational axis (3), initially by contour lines (12', 13') which are situated opposite one another radially, with a radially inner contour line (12') in longitudinal section initially running so as to rise above the rotational axis (3) in the direction of the end side (11), and then merging at the end side (11) into a radially outer contour line (13').

7. Coupling element according to Claim 1, **characterized in that** the teeth (14), and tooth spaces of the teeth (14) between the teeth (14) which are adjacent to one another at the peripheral side, are aligned radially lengthwise.

8. Coupling element according to Claim 7, **characterized in that**, before the forming of the teeth (14), the section (4) is delimited at least radially by contours (12, 13) which converge on one another radially.

9. Coupling element according to Claim 8, **characterized in that** the greatest spacing (C') between the contours (12, 13) on the section (4) before the forming of the teeth (14) is at a base (E'), with the section (4) projecting from the coupling element (1) at the base (E'), and here, the smallest overall length (L) of the formed teeth (14) in the axial projection (A) being greater than the axial projection (C) of the spacing (C') by at most one-fifth, and with the overall length (L) of the teeth (14) being measured in the tooth root plane (16') of the spur toothing (5, 6, 7).

10. Coupling element according to Claim 8, **characterized in that**, before the forming of the teeth (14), the greatest length (W) reflected in the radial projection (D) of the section (4) is at least twice as long as the theoretical tooth height (B) of the formed teeth (14), wherein in the projection (D), the greatest length (W) is projected between the end side (11) and a base (E') at which the section (4) projects axially from the coupling element (1), and with the theoretical tooth height (B) being the greatest axial spacing, measured in a forming die for forming the teeth (14), between the tooth root plane (16') and the tooth tip plane (17).

11. Coupling element according to one of the preceding claims, **characterized in that** it is a joint bell (2).

12. Wheel bearing unit having a coupling element (1) according to one of Claims 1 to 11 and a hub (18), **characterized in that** the coupling element (1) is assigned to a cardan shaft arrangement for driving at least one vehicle wheel, and the mating toothing (24) is assigned to the hub (18), with the hub (18) being rotatably mounted together with the vehicle wheel by means of a wheel bearing.

## Revendications

1. Élément d'accouplement (1) comprenant une denture frontale (5, 6, 7) destinée à la transmission de couples autour d'un axe de rotation (3), la denture frontale (5, 6, 7) s'engrenant axialement dans une denture conjuguée (24) correspondante, la denture frontale (5, 6, 7) étant réalisée avec des dents (14) constituées de matériau, formé au moins partiellement plastiquement par enlèvement de copeaux, de l'élément d'accouplement (1), la denture frontale (5, 6, 7) étant réalisée au niveau d'au moins une section (4) qui fait saillie axialement à partir de l'élément d'accouplement (1) et qui comprend les dents (14) au moins proportionnellement sur un côté frontal axial (11), la section (4) s'étendant de manière annulaire avec symétrie de révolution autour de l'axe de rotation (3), **caractérisé en ce qu'**une rainure annulaire (10) ouverte axialement est réalisée radialement entre la section (4) faisant saillie axialement à partir de l'élément d'accouplement (1) et une partie de l'élément d'accouplement (1).

2. Élément d'accouplement selon la revendication 1, **caractérisé en ce que** l'élément d'accouplement (1) peut être associé à un ensemble d'arbre articulé pour l'entraînement d'au moins une roue de véhicule.

3. Élément d'accouplement selon la revendication 1, **caractérisé en ce que** la section (4) est réalisée en le même matériau que l'élément d'accouplement (1).

4. Élément d'accouplement selon la revendication 1, **caractérisé en ce que** les contours (12, 13), à partir de là où la section (4) fait saillie axialement à partir de l'élément d'accouplement (1), se rapprochent de plus en plus radialement l'un de l'autre en direction du côté frontal (11) et les contours (12, 13) se prolongent finalement l'un dans l'autre au niveau du côté frontal (11) de la section (4).

5. Élément d'accouplement selon la revendication 4, **caractérisé en ce que** les contours (12, 13) sont tout d'abord délinéés, dans des sections longitudinales quelconques orientées axialement le long de l'axe de rotation (3), par des lignes de contour (12', 13') radialement opposées l'une à l'autre, une ligne de contour (13') radialement extérieure en section longitudinale s'étendant tout d'abord de manière descendante en direction du côté frontal (11) vers l'axe de rotation (3) et se prolongeant finalement en une ligne de contour (12') radialement intérieure au niveau du côté frontal (11).

6. Élément d'accouplement selon la revendication 4, **caractérisé en ce que** les contours (12, 13) sont tout d'abord délinéés, dans des sections longitudinales quelconques orientées axialement le long de l'axe de rotation (3), par des lignes de contour (12', 13') radialement opposées l'une à l'autre, une ligne de contour (12') radialement intérieure en section longitudinale s'étendant tout d'abord de manière ascendante en direction du côté frontal (11) au-dessus de l'axe de rotation (3) et se prolongeant ensuite en une ligne de contour (13') radialement extérieure au niveau du côté frontal (11).

7. Élément d'accouplement selon la revendication 1, **caractérisé en ce que** les dents (14) et les entredents des dents (14) entre les dents (14) adjacentes les unes aux autres du côté périphérique sont orientés radialement dans le sens de la longueur.

8. Élément d'accouplement selon la revendication 7, **caractérisé en ce qu'**avant la formation des dents (14), la section (4) est délimitée au moins radialement par des contours (12, 13) se rapprochant radialement l'un de l'autre.

9. Élément d'accouplement selon la revendication 8, **caractérisé en ce qu'**avant la formation des dents (14), la plus grande distance (C') entre les contours (12, 13) au niveau de la section (4) se situe au niveau d'une base (E'), la section (4) faisant saillie à partir de l'élément d'accouplement (1) au niveau de la base (E') et en l'occurrence la plus petite longueur totale (L) des dents formées (14) étant, en projection axiale (A), supérieure d'au plus un cinquième à la projection axiale (C) de la distance (C') et la longueur totale (L) des dents (14) étant mesurée dans le plan de pied de dent (16') de la denture frontale (5, 6, 7).

10. Élément d'accouplement selon la revendication 8, **caractérisé en ce qu'**avant la formation des dents (14), la plus grande longueur (W), représentée en projection radiale (D), de la section (4) est au moins deux fois plus grande que la hauteur de dent (B) théorique des dents formées (14), la plus grande longueur (W) entre le côté frontal (11) et une base (E') au niveau de laquelle la section (4) fait saillie axialement à partir de l'élément d'accouplement (1) étant projetée dans la projection (D) et la hauteur de dent (B) théorique étant la plus grande distance axiale, mesurée dans un outil de formage pour former les dents (14), entre le plan de pied de dent (16') et le plan de tête de dent (17).

11. Élément d'accouplement selon l'une quelconque des revendications précédentes, **caractérisé en ce qu'**il est une cloche d'articulations (2).

12. Unité de palier de roue comprenant un élément d'accouplement (1) selon l'une quelconque des revendications 1 à 11 et un moyeu (18), **caractérisée en ce que** l'élément d'accouplement (1) est associé à un ensemble d'arbre articulé pour entraîner au moins une roue de véhicule et la denture conjuguée (24) est associée au moyeu (18), le moyeu (18) étant, conjointement avec la roue de véhicule, monté de manière rotative au moyen d'un palier de roue.
